# FASCICULE DE BREVET EUROPEEN

(11) **EP 0 827 897 B1**
(45) Date de publication et mention de la délivrance du brevet: **07.11.2001**
(21) Numéro de dépôt: 97440066.5
(22) Date de dépôt: 13.08.1997
(51) Int. Cl.: B62D 53/06, B62D 21/11

(54) **Dispositif de faux-châssis pour remorque ou semi-remorque auto-portante**
Fahrschemelvorrichtung für selbsttragende Sattelfahrzeuge oder Anhänger
Subframe device for self-supporting trailer or semi-trailer

(30) Priorité: 09.09.1996 FR 9611104
(43) Date de publication de la demande: 11.03.1998
(73) Titulaire: Spitzer Eurovrac, 67640 Fegersheim (FR)
(72) Inventeur: Gantzer, Patrick, 67490 Dettwiller (FR)
(74) Mandataire: Arbousse-Bastide, Jean-Claude Philippe

(56) Documents cités:
- US-A- 3 001 796
- US-A- 3 866 894

## Description

La présente invention a pour objet un dispositif de faux-châssis pour remorque ou semi-remorque auto-portante.

Les essieux des remorques ou des semi-remorques sont solidarisés au châssis ou au faux-châssis pour une remorque auto-portante, par l'intermédiaire d'éléments de suspension, la suspension étant en général pneumatique.

Un élément de suspension comporte par essieu un moyen de fixation comprenant, pour chacune des deux roues, une main solidaire de l'un des deux longerons, permettant l'articulation, par l'une des ses extrémités, d'un bras de traction solidarisé à l'essieu, l'autre extrémité venant en appui sur un coussin pneumatique prenant lui-même appui sur le longeron. Chaque main permet également dans certains cas, l'articulation de l'extrémité d'un amortisseur, dont l'autre extrémité est solidaire de l'essieu.

Afin de réduire les poids à tracter, les faux-châssis, notamment leurs longerons, sont réalisés en aluminium, ce qui nécessite des adaptations particulières pour la solidarisation d'une main.

En effet, la main étant réalisée en acier, il est en général nécessaire de souder sur celle-ci une plaque d'acier boulonnée sur le longeron, de plus, les mains de deux roues en regard sont solidarisées l'une à l'autre par l'intermédiaire d'une entretoise, également en acier, ce qui présente l'inconvénient d'alourdir la structure.

Pour pallier ces inconvénients, certains ont proposé de réaliser des mains en aluminium soudées directement sur les longerons.

Toutefois, cette solution présente également des inconvénients, d'une part la soudure n'est pas aisée à réaliser, et d'autre part cette soudure n'est pas fiable dans le temps.

La présente invention a pour but de remédier à ces inconvénients en proposant un dispositif de faux-châssis, autorisant un gain de poids appréciable, tout en permettant une solidarisation très fiable des éléments de suspension.

Le dispositif de faux-châssis objet de la présente invention se caractérise essentiellement en ce qu'il comporte longitudinalement, en remplacement des longerons et faisant partie intégrante de la structure de la remorque ou de la semi-remorque, deux profilés parallèles réalisés en aluminium, de section en U retourné, dont les deux ailes parallèles de chacun desquels sont découpées de manière à former une structure permettant de recevoir directement les éléments de suspension.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue partielle de profil d'un dispositif de faux-châssis de remorque selon l'invention.
- la figure 2 représente une vue partielle en coupe transversale d'une partie du même dispositif.
- la figure 3 représente une vue partielle de dessus du même dispositif.

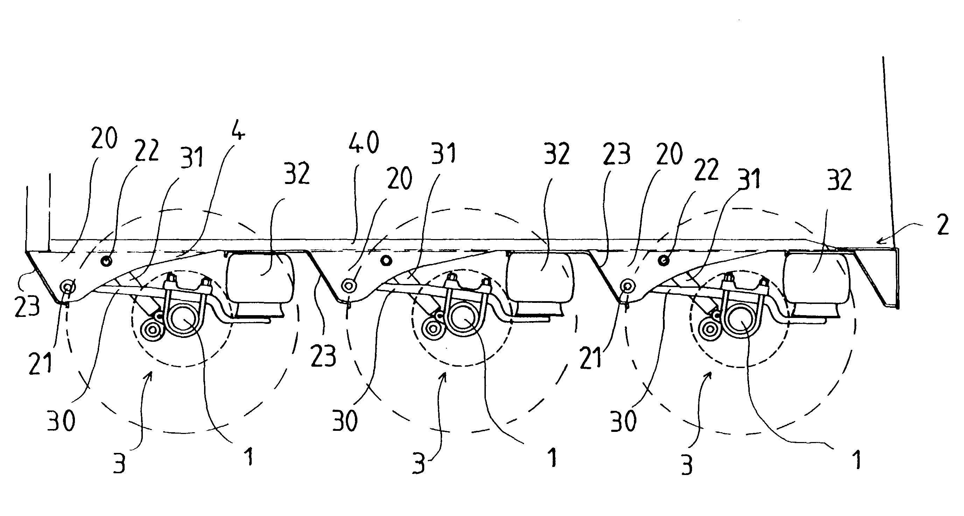

Si on se réfère à la figure 1, on peut voir la partie arrière d'une remorque ou d'une semi-remorque, comportant trois essieux 1 solidarisés à un faux-châssis 2, chacun par l'intermédiaire d'un élément de suspension comprenant deux moyens de fixation 3, dont un seul est visible par essieu 1.

Un moyen de fixation 3 comporte essentiellement un bras de traction 30, un amortisseur 31 et coussin pneumatique 32, le bras de traction 30 et l'amortisseur 31 étant solidarisés, par l'une de leurs extrémités, au faux-châssis 2 par l'intermédiaire d'une main 20.

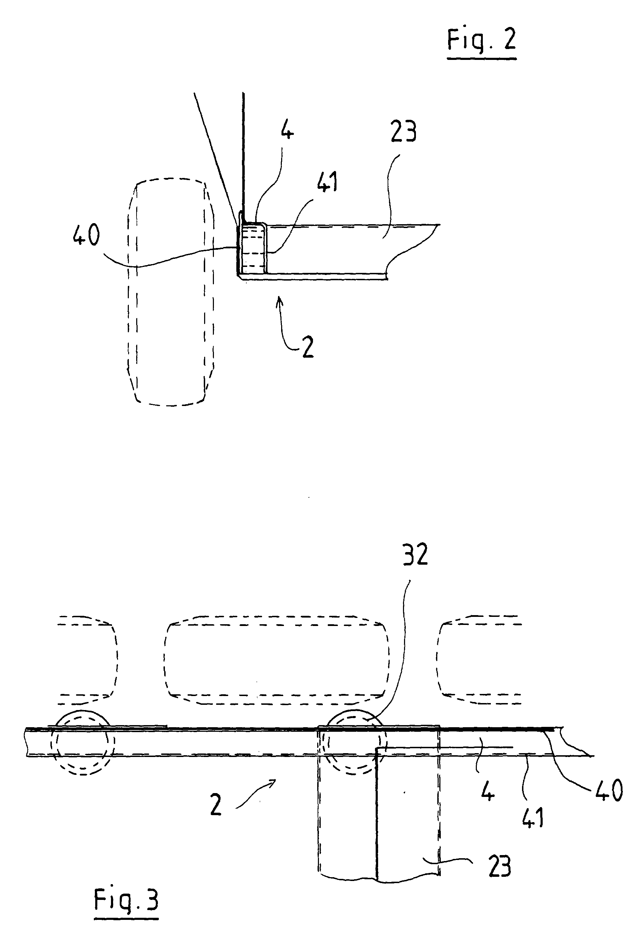

Le faux-châssis 2 incorpore, comme cela est également visible sur les figures 2 et 3, de chaque côté, un profilé 4 de section transversale en forme de U renversé.

Les ailes 40 et 41 du profilé 4 sont découpées symétriquement de manière à ne laisser subsister que des parties 20 de forme générale triangulaire faisant office de mains, et qui sont percées de trous 21 et 22 pour la fixation, respectivement du bras de traction 30 et de l'amortisseur 31.

Il est à noter que pour certains éléments de suspension, l'amortisseur 31 n'est pas solidarisé à proximité du bras de traction 30, mais par exemple au niveau du coussin pneumatique 32, dans ce cas il convient de prévoir un moyen de fixation à côté de ce dernier.

On peut également voir sur ces figures que le faux-châssis 2 incorpore des plaques pliées 23, entretoisant les profilés 4, en étant soudées sur les bords des ailes 40 et 41 de ceux-ci.

Un dispositif de faux-châssis selon l'invention permet une réduction appréciable du poids, à titre d'exemple, le gain de poids pour une remorque ou semi-remorque auto-portante est de l'ordre de 300 kilogrammes.

De plus, la réduction de poids est réalisée en limitant l'utilisation d'acier, mais également en réduisant la quantité d'aluminium utilisée, du fait de la suppression des longerons, ce qui permet de réduire considérablement le coût de fabrication.

Il est à noter que le dispositif selon l'invention permet d'envisager la réalisation d'un châssis porteur pour les remorques ou les semi-remorques de petites dimensions.

## Revendications

1. Dispositif de faux-châssis pour remorque ou semi-remorque auto-portante **caractérisé en ce qu'**il comporte longitudinalement, en remplacement des longerons et faisant partie intégrante de la structure de la remorque ou de la semi-remorque, deux profilés parallèles (4) réalisés en aluminium, de section en U retourné, dont les deux ailes (40, 41) parallèles de chacun desquels sont découpées de manière à former une structure (20) permettant de recevoir directement les éléments de suspension (3).

2. Dispositif selon la revendication 1 **caractérisé en ce que** les ailes (40, 41) des profilés (4) sont découpées symétriquement de manière à ne laisser subsister que des parties (20) de forme générale triangulaire, faisant office de mains de fixation des éléments de suspension (3).

3. Dispositif selon la revendication 1 ou la revendication 2 **caractérisé en ce qu'**il incorpore des plaques pliées (23), entretoisant les profilés (4), en étant soudées sur les bords des ailes (40, 41) de ceux-ci.

## Patentansprüche

1. Fahrzeugschemelvorrichtung für selbsttragende Sattelfahrzeuge oder Anhänger, **dadurch gekennzeichnet, daß** sie in longitudinaler Richtung zwei parallele U-förmige Profile (4) aus Aluminium als Ersatz für Längsträger und als integraler Bestandteil der Sattelfahrzeug- oder Anhängerstruktur aufweist, deren zwei parallele Schenkel (40,41) derart ausgeschnitten sind, daß sie eine Struktur (20) bilden, die es erlaubt, direkt die Aufhängungselemente (3) aufzunehmen.

2. Vorrichtung nach Anspruch 1, **dadurch gekennzeichnet, daß** die Schenkel (40,41) der Profile (4) symmetrisch ausgeschnitten sind, so daß nur im wesentlichen dreieckige Teile (20) übrigbleiben, die als Befestigungsfederhand für die Aufhängungselemente (3) dienen.

3. Vorrichtung nach Anspruch 1 oder Anspruch 2, **dadurch gekennzeichnet, daß** sie gebogene Platten (23) aufweist, die die Profile (4) absteifen, indem sie an die Ränder deren Schenkel (40,41) geschweißt sind.

## Claims

1. Underbody device for car-carrying trailer or articulated lorry, distinguished by the fact that it longitudinally includes, as a replacement for the side frames and forming an intregal part of the structure of the trailer or of the articulated lorry, two parallel metal profiles (4) made of aluminium, with a section taking the form of an upside-down U, the two parallel wings (40, 41) of each of which are cut in such a way as to form a structure (20) making it possible to receive the suspension elements (3) directly.

2. Device as Claim 1, distinguished by the fact that the wings (40, 41) of the profiles (4) are symmetrically cut in such a way as to allow only parts (20) to remain, which are generally triangular in shape, acting as fastening brackets for the suspension elements (3).

3. Device as Claim 1 or Claim 2, distinguished by the fact that it incorporates folded plates (23) separating the profiles (4), being welded onto the edges of the wings (40, 41) of the latter.
